# EUROPEAN PATENT SPECIFICATION

(11) **EP 4 454 453 B1**
(45) Date of publication and mention of the grant of the patent: **11.03.2026**
(21) Application number: 23169634.5
(22) Date of filing: 24.04.2023
(51) Int. Cl.: A01D 43/08

(54) **SWATH MAPPING**
SCHWADABBILDUNG
MAPPAGE D'ANDAIN

(43) Date of publication of application: 30.10.2024
(73) Proprietor: CNH Industrial Belgium N.V., 8210 Zedelgem (BE)
(72) Inventor: Boydens, Joachim, 8210 Zedelgem (BE); Missotten, Bart, 8210 Zedelgem (BE); Mortier, Geert, 8210 Zedelgem (BE); Nona, Kenny, 8210 Zedelgem (BE)
(74) Representative: CNH Industrial IP Department

(56) References cited:
- EP-A1- 3 401 854
- EP-A1- 3 635 649

## Description

### TECHNICAL FIELD

The present invention relates to an improved swath mapping system mounted on an agricultural harvester.

### BACKGROUND

Certain agricultural machines, such as forage harvesters, forage wagons and balers, collect crop material that has been cut from the field. The role of these machines is to collect the material efficiently and process it either by transferring the material to another vehicle for transport or to gather the material into bales, for example.

This cut crop material is typically gathered into swaths or rows in the field to allow the agricultural machine, for example a forage harvester, to collect the crop effectively. There is a need for the operator of the forage harvester to control the volume of the swath being fed into the harvester to ensure that all of the crop material is collected from the field and to prevent the harvester from being jammed up when too much crop is collected at once. Additionally, it may be useful for the operator to know the layout of the swath in the field for determining the most efficient route for collecting the crop.

A further benefit of understanding the volume and layout of swath in a field is that crop yield can be estimated which allows for collection planning, i.e., how many transport vehicles will be required, how many bales will be produced, or the storage volume required for the collected material.

Currently, cameras and scanners such as Laser Imaging Detection And Ranging (LIDAR) are examples of equipment used to determine the volume and layout of swath in a field. The data collected by this equipment is processed into usable data by a controller and provided to the operator or possibly directly to the agricultural harvester.

Document EP 3 635 649 A1 discloses an agricultural harvester according to the preamble of claim 1.

A problem encountered by this approach is a degradation of data quality caused by movement of the sensor as the agricultural harvester passes over the typically rough terrain of a field.

EP 3401854 seeks to solve the abovementioned problem by proposing a system where an aerial drone is fitted with field scanning equipment and is capable of conveying field scan data to an associated agricultural harvester. Apart from being expensive and requiring attention to be operated, a system such as this has limited usability in inclement weather conditions and fields with obstacles such as trees and power lines.

Therefore, the invention seeks to improve field scanning capability from the agriculture harvester itself.

It is against this background that the present invention has been devised.

### SUMMARY OF THE INVENTION

The invention provides an agricultural harvester comprising a swath detection system for determining a distribution of swath in a field, the swath detection system comprising: a swath sensor attached to the harvester and disposed to capture scan data of the distribution of a swath in the field; a sensor accelerometer disposed to capture information corresponding to the relative movement of the swath sensor in the form of sensor acceleration data at the same time as the swath sensor captures the scan data; and a controller operatively coupled to the swath sensor and the sensor accelerometer, the controller being configured to temporally correlate the scan data with the acceleration data and merge the scan data whilst spatially aligning the scan data in dependence of the temporally correlated sensor acceleration data.

In effect, sensor acceleration data captured by the sensor accelerometer relate to movements of the swath sensor relative to the ground being scanned. Such movement may cause anomalous or mismatched scan data captured by the swath sensor. This sensor acceleration data allows the controller to take account for the movement of the swath sensor relative to the field or the agricultural harvester. This movement is caused by the movement of the agricultural harvester over the often uneven field terrain and, depending on how rigidly the swath sensor is mounted to the agricultural harvester, movement of the swath sensor relative to the agricultural harvester.

As acceleration data of the swath sensor is being captured at the same time as the swath sensor is capturing scan data of the field, each instance scan data would have a temporally corresponding instance of sensor acceleration data. Therefore, if there should be any spatial mismatches between instances in the scan data caused by relative movement of the swath sensor, these mismatches can be reduced by taking into account the accelerations of the swath sensor as the scan data were captured. As each instance of data captured by the swath sensor is likely to be a partial scan of the field, a plurality of instances would be required to capture data for an entire field. The controller is configured to arrange or mosaic this data to form a dataset for a larger portion of the field in question. In other words, by taking the relative accelerations of the sensor into account, this swath mapping system may effect a high-quality mosaic of scan data comprising the distribution of swath in a field. For example, a dataset or map of an adjacent swath can be compiled whilst the harvester travels along the field collecting swath. Once at a headland of the field, the the compiled dataset or map is used to navigate to/along and collect the next swath. This process may be repeated for each successive swath until all of the swath is harvested.

Beneficially, this high-quality data can be used to assess the volume of swath in the field, which allows the operator to conduct a level of collection planning, for example, understanding the storage requirements of the collected swath, how many vehicles/trips may be required to deposit the swath at the storage facility and the time it may take to collect all of the swath from the field. The time element is often a very important consideration as swath collection during dry periods of weather is essential. Knowing if a field can be harvested before it rains is an important factor for the operator to consider.

The scan data of the field may comprise topographic data, describing a 3D surface of the field in the field of view (FOV) of the swath sensor. For example, the topographic data comprises surface contour lines or 3D surface datapoints recorded in latitudinal, longitudinal and altitudinal directions. The topographic data may comprise crop swaths, bumps, undulations, ditches and obstacles present in the field. Beneficially, the operator can view and interpret the scan data to devise a route through the field to collect the swath in an efficient manner whilst avoiding any of the obstacles present. Furthermore, when swath is routinely deposited in a vehicle that is driven in close proximity to the agricultural harvester, by the agricultural harvester, the operator can plan a route that accounts for both vehicles moving in unison about the field. Alternatively, the agricultural harvester may comprise a level of automation to the extent that the scan data can be interpreted and an efficient route plotted to collect the swath.

The sensor may comprise a camera or a laser scanner. Optionally, the laser scanner may take the form of a Laser Imaging Detection And Ranging (LIDAR) device. Typically, devices such as cameras and LIDAR have an optimal operational range to the object to be scanned. This range can be tailored for fitment to the agricultural harvester and fixed in relation to the ground to be scanned.

Optionally, the harvester may further comprise a vehicle accelerometer disposed to capture vehicle acceleration data. Providing a second and separate acceleration data stream allows the controller to further enhance the quality of the merged data it produces by distinguishing between vehicle level accelerations and sensor level accelerations. Beneficially, the ability of the controller to self-check data accuracy is increased with each additional data stream to compare against the others.

The accelerometer(s) may comprise an Inertia Measurement Unit (IMU). IMUs are considered the gold standard in measuring acceleration, with the added benefits of being able to measure orientation, as well as acceleration in all six dimensions, three rotational and three linear.

The agricultural harvester may further comprise a geolocation module to provide global location data of the vehicle and subsequently the data captured by the sensor. This information allows the global position of the individual instances of scan data to be cross checked against global positional data and their location relative to one another to be ratified.

The invention also relates to a method of determining a distribution of swath in a field, the method comprising: capturing scan data of the distribution of swath in a field using a swath sensor; capturing sensor acceleration data of the swath sensor at the same time as the swath sensor scans the distribution of swath in a field; temporally correlating the scan data with the sensor acceleration data; and; and merging the scan data whilst spatially aligning in dependence of the temporally correlated sensor acceleration data.

Optionally, the method may also include capturing vehicle acceleration data at the same time as capturing the scan data and the sensor acceleration data. The temporal correlation step would then further comprise temporally correlating the scan data to the vehicle acceleration data. Likewise, the merging step would comprise merging the scan data whilst spatially aligning in dependence of both the sensor acceleration data and the vehicle acceleration data.

Furthermore, the method may comprise receiving a signal comprising geographical location data of the harvester at the same time as the scan data is captured. This additional data stream allows further ratification that the spatial relationship between the scan data in the merged scan data is accurate.

### BRIEF DESCRIPTION OF THE DRAWINGS

Embodiments of the invention will now be described by way of example with reference to the accompanying drawings, in which:
Figure 1 schematically shows a forage harvester equipped with a swath mapping system;
Figure 2 shows a plan view of a forage harvester equipped with a swath mapping system;
Figure 3 is a schematic illustration of an exemplary controller of the system shown in Figure 1; and
Figure 4 shows a plan view of a forage harvester in a scanned field and a plotted route for swath collection.

### DETAILED DESCRIPTION

In the following, an agricultural harvester is described on which the above-described invention can be advantageously used.

The directions up, down, forward, and rearward are herein defined relative to the general orientation and direction of an agricultural harvester driving over a field and picking up crop.

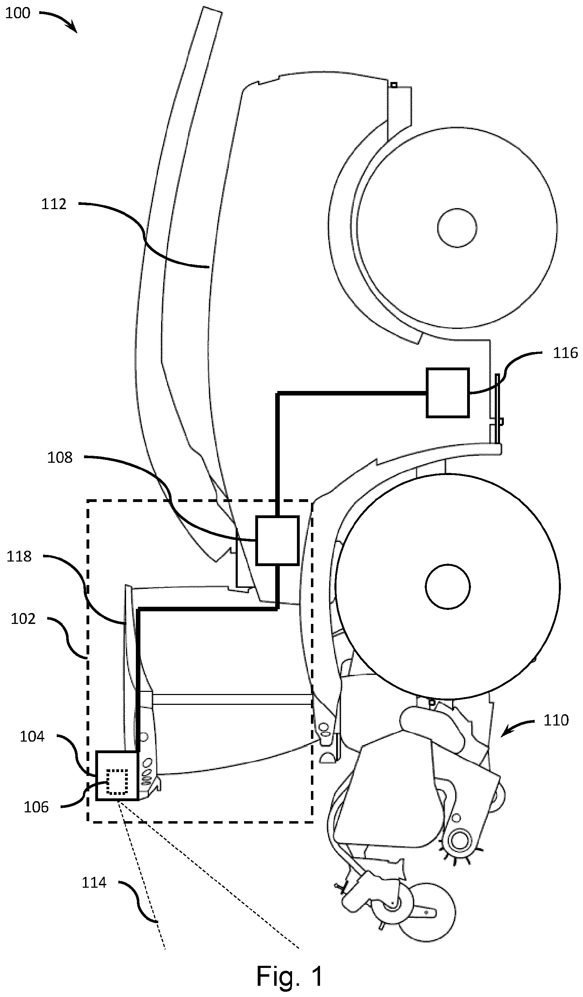

Figure 1 shows a schematic side view of an exemplary embodiment of an agricultural vehicle, illustrated in the form of a forage harvester 100. As the harvester 100 advances through a field, crops, e.g., grass or alfalfa, are gathered by a pickup assembly 110 and transported to a central crop inlet of the forage harvester 100 where they enter the harvester 100 through a set of feed rolls. The feed rolls guide the crops in the form of a mat with a given thickness towards the cutting drum, about a rotation axis that is transversal to the direction of movement of the crops. Knives are mounted on and distributed along the full circumference of the drum, so that the knives pass by a stationary shear bar as the drum rotates, thereby chopping the crops into small pieces which are further transported between the cutting drum and a concave. The chopped material is then ejected by a blower through a spout. It should be appreciated that while the agricultural vehicle is illustrated and described as a forage harvester 100, in some embodiments swath detection system may be used in combination with other agricultural vehicles such as a tractor, windrower/swather, grass wagon, a combine harvester, or a baler, e.g., a large square baler, a small square baler, or a round baler on which the invention may be used.

Figure 1 also shows an example placement of a swath detection system 102 on an agricultural harvester 100. As the harvester 100 advances through a field, the swath sensor 104, located on the harvester 100, captures three-dimensional scan data of the surrounding field and its contents, for example, swath 200. A sensor accelerometer 106 is disposed to measure relative accelerations of the swath sensor 104 caused by the movement of the harvester through the field as the swath sensor scans the field. As the swath sensor 104 is only capable of capturing data of the surface of the field in the vicinity of the harvester 100, both the swath sensor 104 and the sensor accelerometer 106 communicate directly with a controller 108. The controller 108 is configured to merge the three-dimensional scan data of the field captured by the swath sensor 104 so a scan dataset for the entire field can be created. The quality of this field dataset is improved by using the acceleration data captured by the sensor accelerometer 106 to offset anomalous datapoints in the dataset which will be explained in greater detail below.

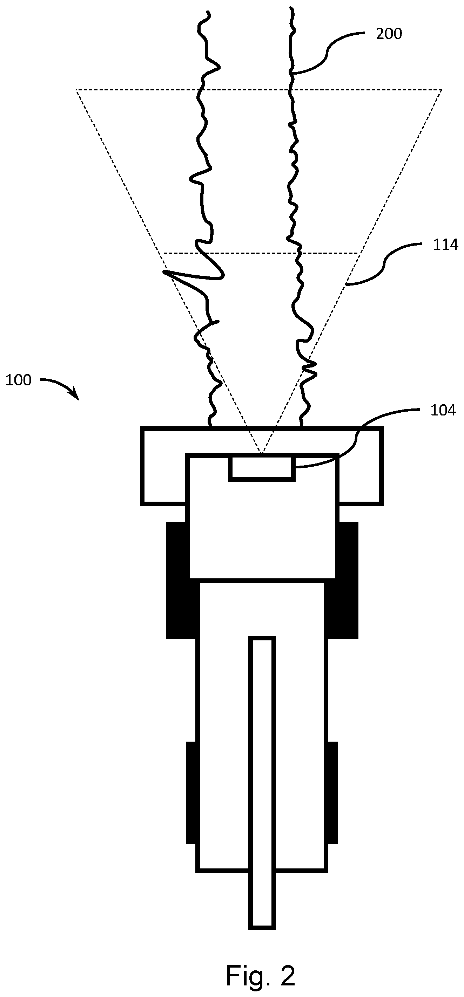

Figure 2 shows a plan view of an agricultural harvester 100 fitted with a swath detection system 102. In this figure, the swath sensor 104 is positioned on a front edge of a canopy of the cockpit of the agricultural harvester 100. Alternatively, the sensor 104 could be mounted on a number of other locations on the harvester 100, for example on the pickup assembly 110 or on the grain tank 112. From any of these vantage points, the swath sensor 104 has a clear view of the field and its contents, for example swath 200. In Figure 2, the FOV 114 of the swath sensor 104 located on the canopy of the cockpit is shown.

The swath sensor 104 typically comprises an optical sensor but other types of sensors may be used. Of the available optical sensors, a camera, laser scanner or a Laser Imaging Detection And Ranging (LIDAR) device are preferable as they have been tried and tested for use in swath detection. The purpose of the swath sensor 104 is to capture scan data of the field and its contents from the harvester 100. To achieve this, the swath sensor 104 is located on the harvester 100 in a position with an unrestricted view of the ground, for example on the canopy of the cockpit 118.

The swath detection system 102 of the invention further comprises a sensor accelerometer 106 mechanically coupled to the swath sensor 104 to detect accelerations of the sensor 104. The sensor accelerometer 106 may be part of or rigidly mounted to the swath sensor 104. Alternatively, the sensor accelerometer 106 may be rigidly mounted to a frame or mount shared with the swath sensor 104. In any of the above mounting examples, the sensor accelerometer 106 would be mounted such that there is no discrepancy between the acceleration data and the actual swath sensor 104 movement.

The sensor accelerometer 106 could take the form of, for example, a solid-state type such as an Inertia Measurement Unit (IMU). IMUs are considered the gold standard in acceleration and orientation detection.

Additionally, the harvester 100 may comprise a vehicle accelerometer 116 to capture vehicle acceleration data relating to vehicle level accelerations. Conveniently, the harvester 100 may comprise a pre-existing vehicle accelerometer 116 for the primary purpose of supplying vehicle level acceleration data to driving aids such as Traction Control System (TCS) and Anti-lock Braking System (ABS). A vehicle accelerometer 116 would be attached to a rigid portion of the vehicle frame, ideally, but not necessarily, near a centre of gravity (CoG) of the harvester 100. The vehicle accelerometer 116 would be mounted such that there is no discrepancy between the vehicle acceleration data captured by the vehicle accelerometer 116 and the actual vehicle accelerations. A notable point is if the swath sensor 104 is rigidly coupled to the vehicle frame to the extent that sensor level accelerations and vehicle level accelerations are substantially the same, then the vehicle accelerometer 116 may be used in lieu of a sensor accelerometer 106. Similar to the sensor accelerometer 106 mentioned above, the vehicle accelerometer 116 may take the form of an IMU type for the same reasons as outlined above.

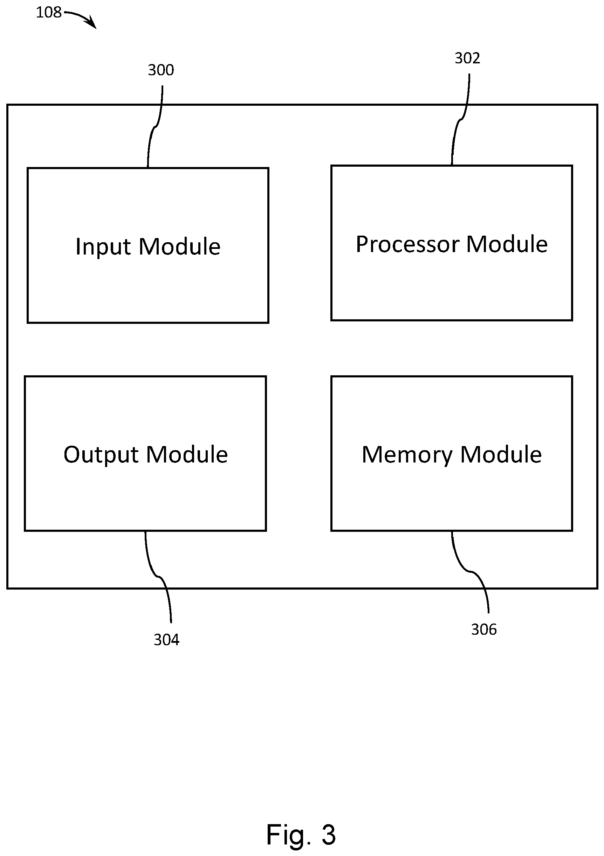

Both the swath sensor 104 and the accelerometers 106, 116 are operatively coupled to a controller 108, shown in Figure 1 and schematically in Figure 3. The controller 108 is configured to receive inputs from both the swath sensor 104 and the accelerometers 106, 116. The controller 108 may be integrated with the swath sensor 104 or may be positioned remotely within the agricultural harvester 100 from the swath sensor 104.

The controller 108 is operable to temporally correlate the received signals from the swath sensor 104 and accelerometers 106, 116. Next, the controller 108 is configured to merge the data scanned by the swath sensor 104 whilst taking into account the temporally correlated acceleration data. Lastly, the controller outputs this enlarged and processed dataset for interpretation by the operator of the harvester 100.

The signal received from the swath sensor 104 by the controller 108 may comprise topographic data of a section the field, hereinafter referred to as a snapshot. The snapshot comprises a three-dimensional scan of the field and its contents and the section of the field comprises the area within the FOV 114 of the swath sensor 104. The FOV 114 is the area of the field visible to the swath sensor from the swath sensor's 104 fixed location on the agricultural harvester 100. In some embodiments, the position and/or orientation of the swath sensor 104 may be adjustable for allowing the FOV 114 to be redirected or enlarged.

In this example, the controller 108 is shown to include an input module 300, a processor module 302, a memory module 306 and an output module 304. That is, in the described example, four functional elements, units or modules are shown. Each of these units or modules may be provided, at least in part, by suitable software running on any suitable computing substrate using conventional or custom processors and memory. Some or all of the units or modules may use a common computing substrate (for example, they may run on the same computing device) or separate substrates, or different combinations of the modules may be distributed between multiple computing devices. The example architecture of the controller is not intended to be limiting on the scope of the invention though and, in other examples, it shall be appreciated that the architecture may take other suitable forms.

The input module 300 is in communication with the swath sensor 104 and the accelerometer(s) 106, 116 and is configured to receive signals from them. Signals received from the swath sensor 104 are indicative of the topography of the field being scanned. Signals received from the accelerometer(s) 106, 116 are indicative of any relative movement/acceleration of the sensor 104 relative to the field or to the vehicle 100 to which it is attached.

The processor module 302 is configured to combine a plurality of snapshots captured by the swath sensor 104 to effect a larger dataset, for example, one that comprises scan data for an entire field. Typically, these snapshots are combined based on their location relative to one another. Without the acceleration input taken into account, this simple combination of data yields questionable quality due to relative movement of the sensor to the field being scanned which, in turn, results in misinterpretation or anomalous data. The processor module 302 takes into account the accelerations of the swath sensor 104 as it scans to overcome this issue.

By way of example, the action of spatially aligning the data will be explained. The swath sensor 104 may take a first snapshot of the field whilst the harvester remains stationary, in other words, where there are no relative accelerations acting on the swath sensor 104. A second snapshot of an adjacent section of the field to the first snapshot may be taken after the harvester has started moving over the rough terrain of the field wherein relative accelerations are being imparted on the swath sensor as it takes the second snapshot. If the snapshots are merged without any corrective action, some misalignment will occur between the snapshots in the merged data resulting in anomalous or unclear data. By temporally correlating the acceleration data taken at the time the snapshots were taken, the controller can use the magnitude and direction of the acceleration measured to realign spatially the snapshots to improve the quality of the dataset as a whole.

The combination of snapshots can be executed in multiple ways, for example, merging a plurality of images of different parts of the FOV 114 together or aligning consecutive images of the same FOV 114 as described above. The recording of acceleration data in tandem with either of these approaches is useful. In the example of merging a plurality of images of different parts of the FOV 114 together, a swath sensor 104 may have multiple sensing heads/signal receivers. If a swath sensor 104 such as this were to exhibit a rotational acceleration about an axis located halfway between the sensing heads/signal receivers, the spatial misalignment of the data captured by each sensing heads/signal receivers would be displaced by the same magnitude but in opposite directions. The controller 108 may be able to rectify this displacement by using the measured acceleration data to apply a correction to the data, aligning the data as if the sensor had never been subject to acceleration whilst the snapshot was being captured.

In each of the abovementioned snapshots, the controller 108 could be configured to establish a ground plane within the data. The ground plane is an approximation of a field surface beneath the swaths and stubs of the crop that existed in the field before it was cut. The ground plane can be considered as a common baseline that exists in all snapshots taken of the field. It is about this common baseline that the controller could align the snapshot to create a high quality dataset of scan data for the entire field.

Furthermore, the controller 108 may be operable to identify scanned features in the field that exist above the ground plane, for example, swath, rocks or objects in the field. Similarly, the controller 108 may be able to identify features in the field that exist below the ground plane such as dips or holes.

The memory module 306 is present to store data relating to the operation of the system. For example, the memory module may store software or algorithms that relates to capturing and merging scan data.

The controller 108 may comprise machine learning recognition techniques to identify various physical features in the snapshot, for example, swath, a ground plane of the field and obstacles such as rocks, bumps, dips, undulations, foliage, etc. This recognition data could be stored on the memory module 308 of the controller 108 for use by the processor module 302 when analysing input data from the swath sensor 104.

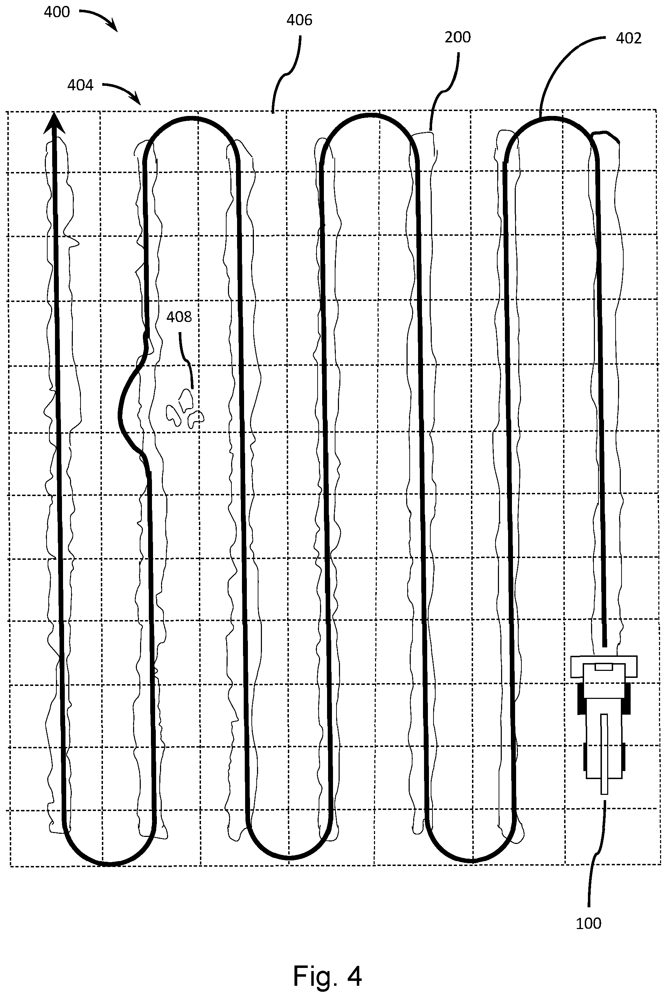

Figure 4 shows an aerial view representation of a typical field 400. An agricultural harvester 100 is shown collecting swath 200 along a path 402 determined by the system 102 of the invention.

In this example, the field 400 has been scanned, the scan dataset being represented by the grid 404 overlaid over the field 400. Each cell 406 of the grid 404 may represent snapshots captured by the swath sensor 104. Other snapshots may partly or fully overlap two or more of the cells 406. The controller 108 has aligned the snapshots into a grid 404 of cells 406 to form the dataset of the entire field 400 as shown. The controller 108 executes this alignment by taking into account the movement of the swath sensor 104 for each snapshot taken. The controller 108 then compensates for this movement by taking into account the acceleration data captured by the sensor accelerometer 106 in order to align each scan with the previous scans.

From this dataset, the controller 108 has identified the various features present in the field 400. Figure 4 shows elongate bodies of gathered swath 200 and a cluster of rocks 408 present in the field 400. The controller 108 has recognised these features in the field 400 and has devised a path 402 the agricultural harvester 100 can travel to collect the swath 200 from the field 400 in an efficient manner. The path has been defined to travel along each row of swath 200 to allow the harvester 100 to collect it. In this example, the controller 108 has also identified the rocks 408 as an obstacle and has therefore plotted a path 402 that circumnavigates the obstacle.

Furthermore, the greater accuracy of the scan data captured by the system of the invention 102 allows for estimation of the volume of swath 200 present in the field 400. With this information, the driving speed of the harvester 100 or the feed rate of swath 200 taken into the harvester can be adjusted to ensure optimal collection efficiency and reduced risk of jams which may cause down-time.

## Claims

1. An agricultural harvester (100) comprising a swath detection system (102) for determining a distribution of a swath (200) in a field (400), the swath detection system (102) comprising:
- a swath sensor (104) attached to the harvester (100) and disposed to capture scan data of the distribution of the swath (200) in the field (400); and
- a controller (108) operatively coupled to the swath sensor (104)
**characterized in that** the swath detection system further comprises a sensor accelerometer (106) disposed to capture sensor acceleration data at the same time as the swath sensor (104) captures the scan data, wherein the controller (108) is operatively coupled also to the sensor accelerometer (106), the controller (108) being configured to temporally correlate the scan data with the sensor acceleration data and merge the scan data whilst spatially aligning the scan data in dependence of the temporally correlated sensor acceleration data.

2. The harvester (100) of Claim 1, wherein the scan data of the field (400) comprises topographic data, describing a 3D surface of the field.

3. The harvester (100) of any preceding claim, wherein the swath sensor (104) comprises a camera.

4. The harvester (100) of either Claim 1 or Claim 2, wherein the swath sensor (104) comprises a laser scanner.

5. The harvester (100) of Claim 4, wherein the laser scanner is a Laser Imaging Detection And Ranging (LIDAR) device.

6. The harvester (100) of any preceding claim, wherein the harvester (100) further comprises a vehicle accelerometer (116) disposed to capture vehicle acceleration data.

7. The harvester (100) of any preceding claim, wherein the sensor and/or vehicle accelerometer (116, 106) comprises an Inertia Measurement Unit (IMU).

8. The harvester (100) of any preceding claim, further comprising a geolocation module.

9. A method of determining a distribution of swath (200) in a field (400), the method comprising:
- capturing scan data of the distribution of swath (200) in a field (400) using a swath sensor (104);
- capturing sensor acceleration data of the swath sensor (104) at the same time as the swath sensor (104) scans the distribution of swath (200) in a field (400);
- temporally correlating the scan data with the sensor acceleration data; and
- merging the scan data whilst spatially aligning the scan data in dependence of the temporally correlated sensor acceleration data.

10. The method of Claim 9, the method further comprising:
- capturing vehicle acceleration data at the same time as capturing the scan data and the sensor acceleration data; and
- temporally correlating the scan data with the vehicle acceleration data;
wherein the spatially aligning of the scan data is further done in dependence of the temporally correlated vehicle acceleration data.

11. The method of Claim 9 or Claim 10, the method further comprising:
- receiving a signal comprising geographical location data of the harvester (100) at the same time as the scan data is captured; and
- ratifying the merged scan data using the geographic location data as a comparator to the spatial alignment of the scan data in the merged scan data.

## Patentansprüche

1. Landwirtschaftliche Erntemaschine (100), umfassend ein Schwaderkennungssystem (102) zur Bestimmung einer Verteilung eines Schwads (200) in einem Feld (400), wobei das Schwaderkennungssystem (102) umfasst:
- einen Schwadsensor (104), der an der Erntemaschine (100) befestigt und angeordnet ist, um Scandaten der Verteilung des Schwads (200) in dem Feld (400) zu erfassen;
und
- eine Steuerung (108), die mit dem Schwadsensor (104) wirkverbunden ist, **dadurch gekennzeichnet, dass** das Schwaderkennungssystem ferner einen Sensorbeschleunigungsmesser (106) umfasst, der angeordnet ist, um Sensorbeschleunigungsdaten zur gleichen Zeit zu erfassen, zu der der Schwadsensor (104) die Scandaten erfasst, wobei die Steuerung (108) auch mit dem Sensorbeschleunigungsmesser (106) wirkverbunden ist, wobei die Steuerung (108) konfiguriert ist, um die Scandaten zeitlich mit den Sensorbeschleunigungsdaten zu korrelieren und die Scandaten zusammenzuführen, während die Scandaten in Abhängigkeit von den zeitlich korrelierten Sensorbeschleunigungsdaten räumlich ausgerichtet werden.

2. Erntemaschine (100) nach Anspruch 1, wobei die Scandaten des Feldes (400) topographische Daten umfassen, die eine 3D-Oberfläche des Feldes beschreiben.

3. Erntemaschine (100) nach einem der vorstehenden Ansprüche, wobei der Schwadsensor (104) eine Kamera umfasst.

4. Erntemaschine (100) nach Anspruch 1 oder 2, wobei der Schwadsensor (104) einen Laserscanner umfasst.

5. Erntemaschine (100) nach Anspruch 4, wobei der Laserscanner eine Laser Imaging Detection And Ranging (LIDAR) Vorrichtung ist.

6. Erntemaschine (100) nach einem der vorstehenden Ansprüche, wobei die Erntemaschine (100) ferner einen Fahrzeugbeschleunigungsmesser (116) umfasst, der angeordnet ist, um Fahrzeugbeschleunigungsdaten zu erfassen.

7. Erntemaschine (100) nach einem der vorstehenden Ansprüche, wobei der Sensor und/oder Fahrzeugbeschleunigungsmesser (116, 106) eine Trägheitsmesseinheit (IMU) umfasst.

8. Erntemaschine (100) nach einem der vorstehenden Ansprüche, ferner umfassend ein Geolokalisierungsmodul.

9. Verfahren zur Bestimmung einer Verteilung des Schwads (200) in einem Feld (400), wobei das Verfahren umfasst:
- Erfassen von Scandaten der Verteilung des Schwads (200) in einem Feld (400) unter Verwendung eines Schwadsensors (104);
- Erfassen von Sensorbeschleunigungsdaten des Schwadsensors (104) zur gleichen Zeit, zu der der Schwadsensor (104) die Verteilung des Schwads (200) in einem Feld (400) scannt;
- zeitliches Korrelieren der Scandaten mit den Sensorbeschleunigungsdaten; und
- Zusammenführen der Scandaten unter räumlicher Ausrichtung der Scandaten in Abhängigkeit von den zeitlich korrelierten Sensorbeschleunigungsdaten.

10. Verfahren nach Anspruch 9, wobei das Verfahren ferner umfasst:
- Erfassen von Fahrzeugbeschleunigungsdaten zur gleichen Zeit wie das Erfassen der Scandaten und der Sensorbeschleunigungsdaten; und
- zeitliches Korrelieren der Scandaten mit den Fahrzeugbeschleunigungsdaten;
wobei das räumliche Ausrichten der Scandaten ferner in Abhängigkeit von den zeitlich korrelierten Fahrzeugbeschleunigungsdaten erfolgt.

11. Verfahren nach Anspruch 9 oder 10, wobei das Verfahren ferner umfasst:
- Empfangen eines Signals, das geografische Standortdaten der Erntemaschine (100) zur gleichen Zeit umfasst, zu der die Scandaten erfasst werden; und
- Ratifizieren der zusammengeführten Scandaten unter Verwendung der geografischen Standortdaten als ein Vergleichswert für die räumliche Ausrichtung der Scandaten in den zusammengeführten Scandaten.

## Revendications

1. Récolteuse agricole (100) comprenant un système de détection d'andain (102) permettant de déterminer une distribution d'un andain (200) dans un champ (400), le système de détection d'andain (102) comprenant :
- un capteur d'andain (104) fixé à la récolteuse (100) et disposé de manière à capturer des données de balayage de la distribution de l'andain (200) dans le champ (400) ;
et
- un dispositif de commande (108) relié de manière fonctionnelle au capteur d'andain (104), **caractérisée en ce que** le système de détection d'andain comprend en outre un accéléromètre de capteur (106) disposé pour capturer des données d'accélération de capteur en même temps que le capteur d'andain (104) capture les données de balayage, dans laquelle le dispositif de commande (108) est également accouplé de manière fonctionnelle à l'accéléromètre de capteur (106), le dispositif de commande (108) étant configuré pour corréler temporellement les données de balayage avec les données d'accélération de capteur et fusionner les données de balayage tout en alignant spatialement les données de balayage en fonction des données d'accélération de capteur corrélées temporellement.

2. Récolteuse (100) selon la revendication 1, dans laquelle les données de balayage du champ (400) comprennent des données topographiques, décrivant une surface 3D du champ.

3. Récolteuse (100) selon l'une quelconque revendication précédente, dans laquelle le capteur d'andain (104) comprend une caméra.

4. Récolteuse (100) selon la revendication 1 ou la revendication 2, dans laquelle le capteur d'andain (104) comprend un dispositif de balayage laser.

5. Récolteuse (100) selon la revendication 4, dans laquelle le dispositif de balayage laser est un dispositif de détection et de télémétrie par imagerie laser (LIDAR).

6. Récolteuse (100) selon l'une quelconque revendication précédente, dans laquelle la récolteuse (100) comprend en outre un accéléromètre de véhicule (116) disposé pour capturer des données d'accélération de véhicule.

7. Récolteuse (100) selon l'une quelconque revendication précédente, dans laquelle le capteur et/ou l'accéléromètre de véhicule (116, 106) comprennent une unité de mesure d'inertie (IMU).

8. Récolteuse (100) selon l'une quelconque revendication précédente, comprenant en outre un module de géolocalisation.

9. Procédé de détermination d'une distribution d'andain (200) dans un champ (400), le procédé comprenant :
- la capture de données de balayage de la distribution d'andain (200) dans un champ (400) à l'aide d'un capteur d'andain (104) ;
- la capture de données d'accélération de capteur du capteur d'andain (104) en même temps que le capteur d'andain (104) balaie la distribution d'andain (200) dans un champ (400) ;
- la corrélation temporelle des données de balayage avec les données d'accélération de capteur ; et
- la fusion des données de balayage tout en alignant spatialement les données de balayage en fonction des données d'accélération de capteur corrélées temporellement.

10. Procédé selon la revendication 9, le procédé comprenant en outre :
- la capture de données d'accélération de véhicule en même temps que la capture des données de balayage et des données d'accélération de capteur ; et
- la corrélation temporelle des données de balayage avec les données d'accélération de véhicule ;
dans lequel l'alignement spatial des données de balayage est en outre effectué en fonction des données d'accélération de véhicule corrélées temporellement.

11. Procédé selon la revendication 9 ou la revendication 10, le procédé comprenant en outre :
- la réception d'un signal comprenant des données d'emplacement géographique de la récolteuse (100) en même temps que les données de balayage sont capturées ; et
- la ratification des données de balayage fusionnées à l'aide des données d'emplacement géographique comme comparateur à l'alignement spatial des données de balayage dans les données de balayage fusionnées.
